Europäisches Patentamt

European Patent Office

Office européen des brevets

(19)

(11) Veröffentlichungsnummer: **0 316 648 B1**

(12)

# EUROPÄISCHE PATENTSCHRIFT

(45) Veröffentlichungstag der Patentschrift:
**21.11.91 Patentblatt 91/47**

(51) Int. Cl.$^5$: **H02J 7/10**

(21) Anmeldenummer: **88118142.4**

(22) Anmeldetag: **31.10.88**

(54) **Ladeverfahren zum Aufladen einer Batterie.**

(30) Priorität: **13.11.87 DE 3738673**

(43) Veröffentlichungstag der Anmeldung:
**24.05.89 Patentblatt 89/21**

(45) Bekanntmachung des Hinweises auf die
Patenterteilung:
**21.11.91 Patentblatt 91/47**

(84) Benannte Vertragsstaaten:
**DE ES FR GB IT**

(56) Entgegenhaltungen:
**DE-A- 2 061 294**
**GB-A- 2 086 674**

(73) Patentinhaber: **SIEMENS**
**AKTIENGESELLSCHAFT**
**Wittelsbacherplatz 2**
**W-8000 München 2 (DE)**

(72) Erfinder: **Seid, Norbert, Dipl.-Ing.**
**Ringstrasse 29**
**W-8525 Marloffstein (DE)**

**Beschreibung**

Die Erfindung betrifft ein Ladeverfahren zum Aufladen einer Batterie.

Durch die Siemens-Zeitschrift 1978, Seiten 206 bis 209 sind zwei Ladeverfahren zum Aufladen von Batterien bekannt. Bei dem einen Verfahren wird während der gesamten Ladedauer eine konstante Ladespannung an die Batterie gelegt. Bei einer solchen Konstantspannungsladung sinkt der Ladestrom mit zunehmender Batteriespannung. Um die volle Batteriekapazität zu erreichen, bedarf es einer sehr langen Ladezeit. Bei dem anderen Verfahren wird die Batterie zunächst mit einem konstanten Strom geladen, bis die zulässige, durch die Gasungsspannung der Batterie festgelegte Ladeschlußspannung erreicht ist. Danach wird das Batterieladegerät auf eine konstante Nachladespannung umgeschaltet und der Ladestrom wird auf einen für die Nachladung zulässigen Wert reduziert. Mit diesem Ladeverfahren ist zwar eine schnellere Aufladung der Batterie möglich, jedoch besteht die Gefahr, daß die Batterie im Nachladebereich in den Gasungszustand gelangen kann.

Der Erfindung liegt die Aufgabe zugrunde, ein Ladeverfahren zum Aufladen einer Batterie zu schaffen, durch das eine Batterie in möglichst kurzer Zeit auf ihren vollen Kapazitätswert aufgeladen und eine Gasung der Batterie mit Sicherheit vermieden wird.

Die Lösung der gestellten Aufgabe gelingt durch die im Kennzeichen des Anspruches 1 angegebenen Merkmale.

Bei diesem Verfahren erhält die zu ladende Batterie während der Phase der Konstantspannungsladung von dem Batterieladegerät oder einem Gleichspannungsnetz einen hohen Ladestrom zugeführt, so daß in entsprechend kurzer Zeit wieder ein bestimmter Ladezustand der Batterie erreicht wird. Infolge des mit der Wiederaufladung verbundenen Anstiegs der Batteriespannung sinkt der Ladestrom beim Anliegen einer Konstantspannung ab. Dadurch, daß der Ladestrom durch das Batterieladegerät ab einem bestimmten Wert konstant gehalten wird, ergibt sich auch mit zunehmendem Aufladungsgrad der Batterie noch eine entsprechend starke Weiterladung, bis die in der Nähe der Gasungsspannung liegende Ladeschlußspannung der Batterie erreicht wird. Durch die chemischen Vorgänge in der Batterie bedingt ergibt sich nach einem Ladevorgang eine Selbstentladung. Der durch diese Selbstentladung bedingte Kapazitätsverlust wird durch die der Batterie weiterhin zugeführten Ladestrom-Impulse wieder ausgeglichen. Mit der Stabilisierung der Selbstentladung werden immer geringere Ladestrom-Impulse erforderlich. Damit die Batterie nicht durch weiterhin zugeführte Ladestrom-Impulse in den Gasungszustand gerät, werden die Ladestrom-Impulse abgeschaltet.

Dadurch, daß nach dem Abschalten der Ladestrom-Impulse durch das Batterieladegerät eine Nachladespannung an die Batterie gelegt ist, die unterhalb der Ladeschlußspannung der Batterie liegt, wird sichergestellt, daß keine Gasung eintritt. Erst wenn die Batteriespannung durch Selbstentladung oder durch Stromentnahme unter diese Nachladespannung abgesunken ist, setzt wieder die Aufladung ein. Die Höhe der Nachladespannung wird so bemessen, daß beispielsweise auch dem Alterungszustand der Batterie Rechnung getragen ist.

Da die Ladeschlußspannung einer Batterie von deren Betriebstemperatur abhängt, ist es aus Sicherheitsgründen vorteilhaft, die nach dem Abschalten der Ladestrom-Impulse am Batterieladegerät angelegte Nachladespannung auf einen Wert einzustellen, der unterhalb der der maximal zulässigen Betriebstemperatur entsprechenden Ladespannung liegt.

Die Kapazität einer Batterie ist bekannterweise von der Temperatur der Batterie abhängig. Eine Anpassung des Aufladevorganges an die jeweils mögliche Kapazität der Batterie gelingt nach einer bevorzugten Ausführung der Erfindung dadurch, daß das Batterieladegerät in Abhängigkeit von der tatsächlichen Betriebstemperatur der Batterie im Sinne einer Ladungserhöhung gesteuert ist.

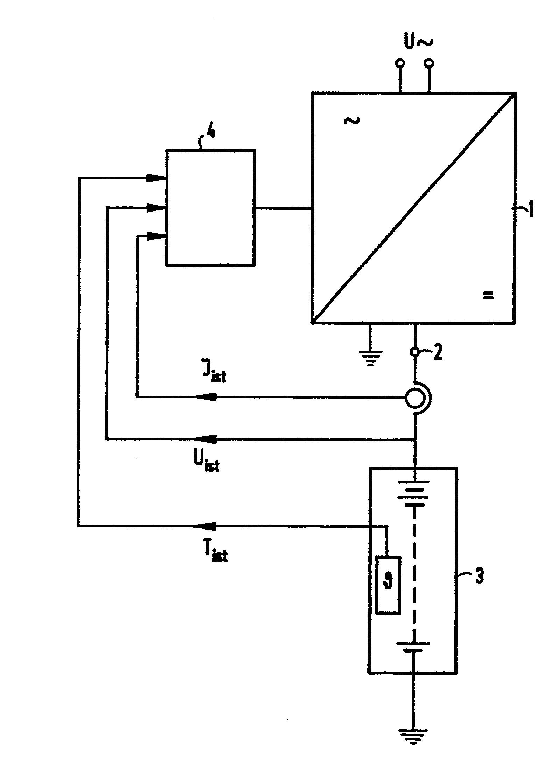

Anhand eines in der Zeichnung dargestellten Ausführungsbeispieles wird die Erfindung nachstehend näher erläutert.

Mit 1 ist ein Batterieladegerät bezeichnet, das mit seinem Wechselspannungseingang an eine Wechselspannungsquelle U angeschlossen ist. Statt eines wechselspannungsgespeisten Ladegerätes kann auch ein Batterieladegerät verwendet werden, das von einer Gleichspannungsquelle gespeist wird. An den Gleichspannungsausgang 2 des Batterieladegerätes 1 ist eine Batterie 3 angeschlossen. Dem Batterieladegerät 1 ist eine Steuereinheit 4 zugeordnet, durch die das Batterieladegerät 1 in Abhängigkeit vom Ladestrom, der Spannung und der Temperatur der Batterie 3 gesteuert wird. Der Steuereinheit 4 werden dementsprechend jeweils die Istwerte der Temperatur $T_{ist}$, der Spannung $U_{ist}$ und des Ladestromes $I_{ist}$ der Batterie zugeführt. Ferner können dem Steuergerät 4 auch noch die Spannungen der Batterie-Zellenblöcke zugeführt werden, so daß eine Kurzschlußüberwachung der einzelnen Zellenblöcke möglich ist.

Liegt die Spannung der Batterie 3 unter einem vorgegebenen Wert, wird durch die Steuereinheit 4 entweder das Batterieladegerät 1 auf Abgabe einer konstanten Ladespannung gesteuert oder die Batterie wird zunächst an ein vorhandenes Gleichspannungsnetz konstanter Spannung geschaltet. Eine konstante Ladespannung hat bei einer stark entladenen Batterie 3 infolge der entsprechend niedrigen Spannung der Batterie 3 einen relativ hohen Ladestrom zur Folge, so daß die Batterie 3 schnell geladen wird. Mit zunehmender Ladung steigt auch die Batteriespannung und der Ladestrom sinkt entsprechend. Sobald der Ladestrom auf einen in der Steuereinheit 4 vorgegebenen Wert abgesunken ist, wird das Batterieladegerät 1 durch die Steuereinheit 4 so gesteuert, daß es einen konstanten Ladestrom liefert. Hierdurch wird die effektive Aufladung der Batterie 3 fortgesetzt.

Erreicht die Spannung an der Batterie 3 den Wert der Ladeschlußspannung, so schaltet die Steuereinheit 4 das Batterieladegerät auf Taktbetrieb um. Das Batterieladegerät 1 liefert jetzt nur noch einzelne Ladestromimpulse. Dieser Taktbetrieb wird bis zum Erreichen einer vorbestimmten Anzahl von Ladeimpulsen oder bis zum Erreichen einer Mindestdauer der Ladeimpulse fortgesetzt. Nunmehr steuert die Steuereinheit 4 das Batterieladegerät 1 so, daß sich an dessen Gleichspannungsausgang 2 eine konstante Nachladespannung einstellt, die unter dem Wert der Ladeschlußspannung der Batterie 3 liegt. Somit wird eine zur Gasung der Batterie 3 führende schädliche Spannung verhindert.

Sinkt die Batteriespannung infolge Selbstentladung oder Stromentnahme unter eine festgelegte Spannungsschwelle ab, setzt wieder der Aufladevorgang durch das Batterieladegerät 1 ein. Je nach Höhe der Batteriespannung setzt die Aufladung mit Konstantspannung, konstantem Ladestrom oder auch nur mit einzelnen Lade-Impulsen ein.

Die Steuereinheit 4 steuert die Ausgangsgrößen des Batterieladegerätes 1 ferner in Abhängigkeit von der Betriebstemperatur der Batterie 3. Bei sehr kalter Batterie 3 darf die Ladespannung höher sein als bei warmer Batterie 3. Diesem Umstand wird durch die temperaturabhängige Steuerung Rechnung getragen.

## Patentansprüche

1. Ladeverfahren zum Aufladen einer Batterie (3), die an ein in Abhängigkeit vom Ladezustand der Batterie steuerbares Batterieladegerät (1) anschließbar ist, **dadurch gekennzeichnet,** daß das Batterieladegerät (1) jeweils dann, wenn die Batteriespannung unterhalb eines vorgegebenen Spannungswertes liegt, auf Konstantspannungsladung steuert, daß das Batterieladegerät (1) beim Unterschreiten eines vorgegebenen Stromwertes für den Ladestrom auf Abgabe eines konstanten Ladestromes steuert, daß beim Erreichen der für die Batterie (3) zulässigen Ladeschlußspannung das Batterieladegerät (1) auf Abgabe von Ladestrom-Impulsen steuert, wobei nach Abgabe einer vorbestimmten Anzahl von Ladestrom-Impulsen oder nach Unterschreiten einer Mindestdauer der Ladestrom-Impulse, die Ladestrom-Impulse abgeschaltet sind.

2. Ladeverfahren nach Anspruch 1, **dadurch gekennzeichnet,** daß nach dem Abschalten der Ladestrom-Impulse durch das Batterieladegerät (1) eine Nachladespannung an die Batterie (3) gelegt ist, die unterhalb der Ladeschlußspannung der Batterie liegt.

3. Ladeverfahren nach Anspruch 2, **dadurch gekennzeichnet,** daß die angelegte Nachladespannung auf einen Wert eingestellt ist, der unterhalb der der maximal zulässigen Batterietemperatur entsprechenden Ladeschlußspannung liegt.

4. Ladeverfahren nach Anspruch 2 oder 3, **dadurch gekennzeichnet,** daß die angelegte Nachladespannung in Abhängigkeit von der tatsächlichen Betriebstemperatur der Batterie (3) im Sinne einer Ladungserhöhung gesteuert ist.

## Claims

1. Method for charging a battery (3) which can be connected to a battery charging device (1) controllable in dependence on the charge state of the battery, characterised in that the battery charging device (1) controls towards constant voltage charge when the battery voltage is below a predetermined voltage value, in that when a predetermined current value for the charge current is not reached the battery charging device (1) controls to output a constant charge current, in that when the end-of-charge voltage permissible for the battery (3) has been reached the battery charging device (1) controls to output charge current pulses, and after output of a predetermined number of charge current pulses or after falling below a minimum duration of the charge current pulses, the charge current pulses are disconnected.

2. Charging process according to claim 1, characterised in that when the charge current pulses have been disconnected by the battery charging device (1) a recharge voltage lower than the end-of-charge voltage of the battery, is applied to the battery (3).

3. Charging process according to claim 2, characterised in that the applied recharge voltage is set at a value below the end-of-charge voltage corresponding to the maximum permissible battery temperature.

4. Charging process according to claim 2 or 3, characterised in that the applied recharge voltage is controlled in dependence on the actual operating temperature of the battery (3) in the same way as a charge increase.

## Revendications

1. Procédé de charge d'une batterie (3), qui peut être raccordée à un chargeur de batterie (1) pouvant être commandé en fonction de l'état de charge de la batterie, caractérisé par le fait que le chargeur de batterie (1) commande la charge à une tension constante lorsque la tension aux bornes de la batterie est inférieure à une valeur de tension prédéterminée, que, lorsque le courant de charge tombe au-dessous d'une valeur prédéterminée, le chargeur de batterie commande la délivrance d'un courant de charge constant, que lorsque la tension de fin de charge admissible pour la batterie (3) est atteinte, le chargeur de batterie (1) commande la délivrance d'impulsions de courant de charge, auquel cas, après la délivrance d'un nombre prédéterminé d'impulsions du courant de charge ou lorsque les impulsions du courant de charge tombent au-dessous d'une durée minimale, ces impulsions sont interrompues.

2. Procédé de charge suivant la revendication 1, caractérisé par le fait qu'après l'interruption des impulsions du courant de charge, le chargeur de batterie (1) applique à la batterie (3) une tension de recharge, qui est inférieure à la tension de fin de charge de la batterie.

3. Procédé de charge suivant la revendication 2, caractérisé par le fait que la tension de recharge appliquée est réglée à une valeur inférieure à la tension de fin de charge qui correspond à la température maximale admissible de la batterie.

4. Procédé de charge suivant la revendication 2 ou 3, caractérisé par le fait que la tension de recharge appliquée est commandée en fonction de la température effective de fonctionnement de la batterie (3) dans le sens d'un accroissement de la charge.

U~

~

4

1

=

$J_{ist}$

2

$U_{ist}$

$T_{ist}$

ϑ

3